# EUROPEAN PATENT APPLICATION

(11) **EP 1 147 713 A2**
(43) Date of publication of application: **24.10.2001**
(21) Application number: 01400980.7
(22) Date of filing: 17.04.2001
(51) Int. Cl.: A23L 3/358, A23L 3/3409

(54) **Method for disinfecting wash solution used in food processing**

(30) Priority: 20.04.2000 US 556059
(71) Applicant: L'air Liquide Société Anonyme pour l'étude et l'exploitation des procédés Georges Claude, 75321 Paris Cédex 07 (FR)
(72) Inventor: Yuan, James Tsz-Ching, c/o l'Air Liquide S.A., 75321 Paris Cedex 07 (FR); Vigor, Xavier, c/o l'Air Liquide S.A., 75321 Paris Cedex 07 (FR); Steiner, Edward F., c/o l'Air Liquide S.A., 75321 Paris Cedex 07 (FR)
(74) Representative: Mellul-Bendelac, Sylvie Lisette

(57) **Abstract**

A method for sterilizing wash solution used in food processing includes providing a wash solution having a concentration of organic and inorganic species, such that no more than about 50% of ozone added to the wash solution can be consumed by the organic and inorganic species. Ozone is then introduced into the wash solution prior to using the wash solution to disinfect food products, processing equipment, and food contact surfaces. The concentration within the wash solution can be controlled by analyzing the wash solution to adjust the organic and inorganic species level prior to introducing ozone.

## Description

The present invention relates, in general, to methods for treating food products and, more particularly, to methods for disinfecting wash solutions used in food processing.

Microbial outgrowth is a primary cause of food spoilage. The presence of pathogenic microorganisms on food products can potentially lead to food-borne outbreaks of disease and can cause significant economic loss to food processors. The need to delay the onset of spoilage has lead the food processing industry to seek effective means for disinfecting food products in order to ensure food safety. Currently, food manufacturers use several different technologies to eliminate, retard, or prevent microbial outgrowth. For example, techniques such as heating, irradiation, and application of chemical agents are currently in use. However, the effectiveness of a particular technology can depend on the particular food product and type of microorganism present on the food product. Additionally, certain chemical agents can have a deleterious effect on human health. For example, chlorine has been widely used as a sanitizer for many years, however, chlorine can produce toxic by-products, such as chloramines and trihalomethanes.

Another widely used chemical agent is ozone (O₃). Ozone is a very strong oxidizing agent, having an oxidation potential more than 1.5 that of chlorine and approximately 1.5 that of hydrogen peroxide. Ozone is normally produced by irradiating an oxygen-containing gas with ultraviolet light or corona discharge. Ozone has been widely used as a disinfectant-oxidant in the food industry for many years. Processes have been developed using an ozone solution made by injecting ozone gas into water to sanitize and disinfect food products. Although applying ozone solution to food produces can be an effective means of controlling microbial outgrowth, an effective means of controlling of the ozone concentration in the ozone solution and delivering the ozone solution to the food products is necessary.

The oxygen demand of constituents within a solution can consume various amounts of ozone prior to application of the ozone solution to food products. The oxygen demand of an aqueous solution can be expressed in terms of the solution's biochemical oxygen demand (BOD) or by the solution's chemical oxygen demand (COD), or both. The BOD is a measure of the amount of oxygen required by microorganisms to oxidize the biodegradable organic constituents present in an aqueous solution. Correspondingly, the COD is a measure of the amount of oxygen needed to oxidize the organic matter present in an aqueous solution.

The effectiveness of ozone in a process solution is greatest when constituents of the solution do not compete with the any microorganisms for ozone. When ozone is applied to a clear solution, all or most of the ozone molecules are free to act on the microorganisms. Conversely, when ozone is introduced into an aqueous solution that contains organic and/or inorganic constituents, e.g., the BOD or the COD, or both, of the solution diminishes the ozone's biocidal effectiveness. This is because the dissolved ozone is consumed in reactions with the organic and inorganic constituents within the solution before it can react with the microorganisms. Accordingly, there is a need in the food processing industry for an effective means of delivering ozone into an aqueous solution and regulating the ozone concentration so that the ozone can exert maximum biocidal action on food-borne microorganisms.

The present invention provides a method for disinfecting a wash solution used in food processing. In one aspect, the method includes providing a wash solution having a concentration of organic and inorganic species, such that no more than about 50% of ozone added to the wash solution can be consumed by the organic and inorganic species. Ozone is then introduced into the wash solution, which can then be applied to food products and food processing surfaces.

To regulate the concentration of organic and inorganic species in the wash solution, the wash solution can be treated to lower the concentration of the organic and inorganic species. Methods for lowering the organic and inorganic species in the wash solution can include processes, such as filtration, oxidation, and the like. In one particular embodiment of the invention, the disinfection process includes maintaining processing temperatures between about 0° C. and about room temperature.

In a particular embodiment of the invention, ozone can be introduced to the wash solution by injecting gaseous ozone. The gaseous ozone can be injected at a flow rate sufficient to maintain a constant total ozone dose (C•T) in the wash solution. The total ozone dose is expressed as the product of the ozone concentration C parts-per-million (ppm) and the ozone contact time T (min). In another embodiment of the invention, the ozone can be injected with a feed gas, such as oxygen, air, and mixtures thereof, or an inert gas, air, oxygen, and mixtures thereof, and the like.

The present invention further contemplates the application of recycled wash solution, in which wash solution previously applied to food products is recycled through wash treating processes to reduce the BOD and COD of the solution. Following the wash solution treatment, ozone is again introduced to the recycled wash solution, which is then continuously applied to the treatment of the food products.
Fig. 1 illustrates a schematic diagram of a wash solution sterilization process in accordance with an exemplary embodiment of the invention; and
Fig. 2 is a plot of bacteria count in CFU/ml versus time, which illustrates one of the beneficial aspects of the present invention.

The present invention provides an improved method for disinfecting wash solution that is to be used to reduce or eliminate microbial load in food processing. In the inventive process, before the aqueous wash solution is treated with ozone, it is analyzed for organic and inorganic constituents level of the solution. If the organic and inorganic constituents levels of the solution are not within a predetermined range, a treatment process is carried out to regulate the organic and inorganic constituents level to within specified process limits. Once the organic and inorganic constituents level is within a specified range, ozone is introduced into the solution, which can then be used to control microbial load in food processing. Accordingly, the inventive process enables the maximum biocidal effect of ozone added to wash solution.

In a preferred embodiment of the invention, the wash solution is regulated to have a organic and inorganic constituents level, such that no more than about 50% of ozone added to the wash solution will be consumed by organic and inorganic species present in the wash solution. In a more preferred embodiment of the invention, the wash solution will be regulated, such that no more than about 10% of the ozone added to the solution will be consumed by organic and inorganic species present within the solution. Once the desired organic and inorganic constituents level is attained, ozone is then injected into the solution prior to application of the solution in food processing.

Once the desired organic and inorganic constituents level is attained, ozone can be introduced by various means including gas injection, and the like. For example, a continuous gaseous ozone stream is injected into an aqueous solution to provide a constant dissolved ozone concentration (C•T). In one embodiment, the ozone gas can be injected with a feed gas. The feed gas can be oxygen, air, mixtures of oxygen and air, or a mixture of oxygen, air, and an inert gas. The inert gas can be nitrogen (N₂), carbon dioxide (CO₂) or a noble gas, such as argon, krypton, xenon, neon, and the like. Further, the ozone can be mixed with the inert gas and injected into the aqueous solution, or alternatively, the ozone and the inert gas can be injected separately into the aqueous solution. Preferably, the ozone injection process is carried out at a temperature of about 0° C. to about room temperature. As used herein, room temperature is about 20° C. to about 25° C.

In accordance with the invention, the wash solution disinfection process can be used to disinfect a fresh incoming aqueous solution that is to be used in food processing. The incoming aqueous solution can be water, or a solution of water and other disinfecting agents, such as chlorine, previously added ozone, and the like. After introducing the ozone, the wash solution can be applied directly to food products to ensure a significant reduction in spoilage and substantially reduce the growth of pathogenic microorganisms. Alternatively, the wash solution can be applied to food processing equipment, to food treatment surfaces, and to food packaging.

In another embodiment of the invention, the organic and inorganic constituents regulation process and the ozone introduction process are carried out to disinfect wash water effluent from a food sterilization process. As washing solution is applied to food products, the wash solution becomes contaminated with food-borne microorganisms. If the wash solution is recycled and reused without intervening treatment, the bacterial load can build up within the wash solution. By applying the method of the invention to recycled wash solution, the microbial load from food-borne microorganisms can be substantially reduced. Accordingly, in the alternative embodiment of the invention, the wash solution is recycled and reused while minimizing bacterial load build up.

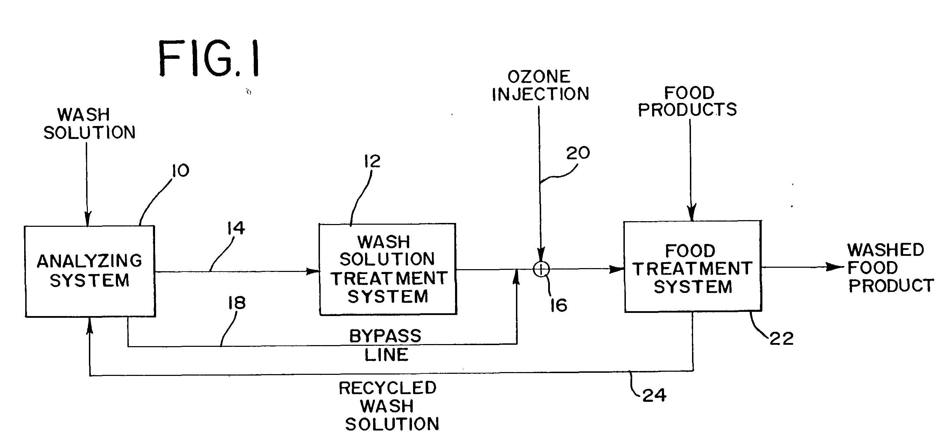

Shown in FIG. 1 is a schematic diagram of an exemplary embodiment of the invention. Wash solution is analyzed for the presence of organic and inorganic species in an analyzing system 10. In analyzing system 10, one of several conventional methods may be used to determine the presence of and the concentration of organic and inorganic species in the wash solution. For example, spectrographic analysis, such as infrared spectrophotometry, atomic absorption analysis, and the like can be used. Control systems within analyzing system 10 can be applied to compare the concentration of organic and inorganic species with predetermined control limits. If the total concentration of organic and inorganic species is not within the predetermined control limits, the wash solution is transferred to a wash solution treatment system 12 through transfer line 14. Alternatively, if the total organic and inorganic species within the wash solution is within the predetermined control limits, the wash solution is transferred to an ozone injection system 16 through a bypass line 18.

In wash solution treatment system 12, the wash solution is treated by a process such as filtration, or oxidation, or the like to reduce the total concentration of organic and inorganic species to within the predetermined control limits. For example, several difference kinds of known filtration processes can be applied to reduce the total concentration of organic and inorganic species within the wash solution. Additionally, oxidizing species, such as oxygen, ozone, and the like, can be introduced to the wash solution to oxidize organic and inorganic species present in the wash solution.

After treating the wash solution to regulate the total concentration of organic and inorganic species, the wash solution is transferred to ozone injection system 16. In a preferred embodiment of the invention, gaseous ozone is introduced to ozone injection system 16 through ozone line 20. As described above, gaseous ozone can be mixed with air, oxygen, inert gases, and the like prior to introduction to ozone injection system 16. Alternatively, an inert gas, air, oxygen, and the like can be separately introduced to ozone injection system 16 through a separate gas line (not shown). In yet another alternative embodiment, aqueous ozone can be introduced through ozone line 20 into ozone injection system 16. Control systems present in ozone injection system 16 can be used to regulate the flow rate of ozone through ozone line 20. Preferably, the flow rate of ozone is regulated to maintain a constant dissolve ozone level C•T in the wash solution. Where gaseous ozone is used, the ozone originates from an ozone generator. The control systems monitor the ozone produced by the ozone generator. The contact time T is provided through electronic feedback system from the wash solution application stage.

Once ozone is introduced to the wash solution, the wash solution is transferred to a food treatment system 22. In food treatment system 22, the wash solution is applied to reduce the food-borne microorganisms in a food process. Accordingly, food treatment system 22 can be one of several different types of systems in which the wash solution is applied to food processing. For example, food treatment system 22 can be a washing bin in which food products are introduced and the wash solution is added to directly disinfect the food product surfaces. The wash solution and the food products can be agitated to provide thorough contact of the solution with food product surfaces. Once the operation within food treatment system 22 is complete, the washed food products are removed.

In another method, food treatment system 22 can be a conveyor system in which food products are positioned on a conveyor belt and passed under one or more spray nozzles. The wash solution is applied to the food products on the conveyor belt through the spray nozzles, such that the wash solution cascades over the surface of the food products positioned on the conveyor belt. Those skilled in the art will recognize that other methods of direct contact of the wash solution with food products can be carried in food treatment system 22. For example, misting systems, and the like, can be used. Furthermore, the food treatment carried out in food treatment system 22 can include additional food treatment processes, such as irradiation, heating, and the like.

In yet another treatment method within food treatment system 22, the sterilized wash solution can be applied to food contact surfaces used in the food processing operation. For example, the wash solution can be sprayed on food handling equipment, such as conveyors, holding bins, sorting systems, and the like. Accordingly, all such variations and modifications of the application of the wash solution to food products and food processing equipment are contemplated by the present invention.

A particular advantage of the present invention includes the ability of the inventive method to continually process wash solution through a food treatment system, while maintaining a control concentration of ozone in the wash solution. Thus, in accordance with another embodiment of the invention, wash solution effluent can be withdrawn from food treatment system 22 and transferred to analyzing system 10 through wash solution recycling line 24. The recycle wash solution returned by wash solution recycling line 24 is analyzed in analyzing system 10 to determine the total concentration of organic and inorganic species introduced by the ongoing in food treatment system 22. Should the total concentration of organic and inorganic species in the wash solution be above the predetermined limits, the recycled wash solution can be transferred to wash solution treatment system 12 and processed as described above. Those skilled in the art will appreciate that the ability to recycle wash solution, while controlling the microbial load of the recycle solution offers substantial cost reduction in a food disinfection process.

Without further elaboration, it is believed that one skilled in the art can, using the foregoing description, fully practice the method of the invention. Therefore, the following example is meant to be merely illustrative and not to limit the invention in any way whatsoever.

### EXAMPLE

To illustrate the benefit of reducing the COD level of wash solution, prior to applying the wash solution to food products, an experimental procedure was carried out to determine the biocidal efficacy of two different wash solutions. A first solution was prepared by washing catfish fillets with two liters of deionized water. The catfish fillets were washed for about two minutes and the COD level was then determined by using a Managese III COD Vials (please insert make, model manufacturer) HACH Co. (Loveland, CO) (please insert the actual words from which the acronym originates)(HACH) kit. The solution was then diluted with a sufficient amount of the deionized water to render a wash solution having a COD level of about 9200 ppm. The wash solution was then treated with ozone, and samples of the ozone solution were removed at different time intervals.

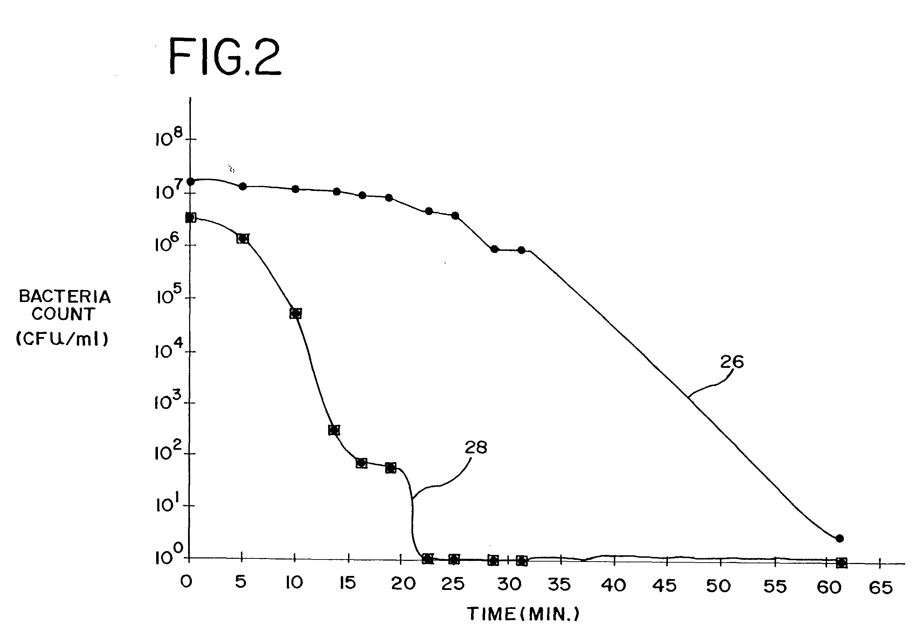

Bacteria counts were taken from each sample using a Petrifilm™ Aerobic Count plate (3M Microbiology Products Company, St. Paul, and Minnesota). Each sample was incubated at about 35° C. for about 48 hours. After incubation, the colony forming units (CFU) were counted and recorded. The difference in CFU per milliliter of solution was computed for each sample. The results are shown by plot 26 in FIG. 2.

In order to illustrate the enhanced biocidal efficacy of a solution having a reduced COD level, a second solution was prepared in the manner described above. However, in contrast to the first solution, following exposure to the catfish fillets, the second solution was filtered through a filter paper (Fisher Scientific, Pittsburgh, PA) to reduce the COD level to about 750 parts per million. Samples of the second solution were removed at periodic intervals and analyzed to determine the bacteria count in CFU/ml. The bacterial count was determined in the same manner for solution two as solution one. The bacteria concentration results are illustrated as plot 28 in Figure 2.

A comparison of plots 26 and 28 illustrates the dramatic effectiveness in reducing bacteria count obtained by controlling the COD level in the solution prior to introducing ozone. For example, a comparison of plots 26 and 28 shows that a change in bacteria concentration of about two orders of magnitude (about 1x 10² CFU/ml) required about 60 minutes for solution one, while the same bacteria concentration was achieved in solution two in only about 15 minutes. These results show that the biocidal efficiency of a solution having an initial COD of about 750 ppm is about 4 times greater than a solution having an initial COD of 9200 ppm.

Accordingly, the experimental results show that by properly regulating the organic and inorganic constituents of washing solutions, the ozone biocidal efficacy can be significantly enhanced. The improvement in the ability to maintain optimum performance of a clean wash solution can aid food manufacturers in producing food products containing fewer pathogenic microorganisms and lead directly to improved public health.

Thus, it is apparent that there has been described in accordance with the invention a method for sterilizing wash solution used in food processing. While the present invention has been described with reference to preferred embodiments thereof, it is to be understood that variations and modifications may be made by those skilled in the art without departing from the spirit of the invention. For example, a wide variety of processing equipment can be used to analyze the wash solution, treat the wash solution, and inject ozone into the wash solution. Accordingly, all such variations and modifications are within the scope of the present invention as set forth in the appended claims and equivalents thereof.

## Claims

1. A method for disinfecting wash solution used in food processing comprising:
providing wash solution having a concentration of organic and inorganic species, such that no more than about 50% of ozone added to the wash solution can be consumed by the organic and inorganic species; and
introducing ozone into the wash solution.

2. The method of claim 1, wherein providing the wash solution comprises treating the wash solution to lower the concentration of organic and inorganic species.

3. The method of claim 2, wherein treating comprises subjecting the wash solution to a process selected from the group consisting of filtration and oxidation.

4. The method of claim 1, wherein introducing ozone comprises injecting gaseous ozone into the wash solution.

5. The method of claim 4, wherein injecting gaseous ozone comprises injecting gaseous ozone at a flow rate sufficient to maintain a constant total ozone dose of C•T, where C is the ozone concentration and T is the ozone contact time.

6. The method of claim 4, wherein injecting gaseous ozone comprises injecting ozone with a feed gas selected from the group consisting of: oxygen, air and mixtures thereof; an inert gas; a mixture of air and an inert gas; a mixture of an inert gas and oxygen; and a mixture of air oxygen and an inert gas.

7. The method of claim 6, wherein the inert gas is selected from the group consisting of nitrogen, carbon dioxide, argon, krypton, xenon, neon, and mixtures thereof.

8. The method of claim 1, wherein the method for sterilizing comprises maintaining process temperatures between about 0° C. and about room temperature.

9. The method of claim 1, wherein the step of providing wash solution comprises providing fresh water.

10. The method of claim 1, wherein the step of providing wash solution comprises providing recycled wash solution.

11. The method of claim 1 further comprising the step of subjecting food products to the wash solution.

12. The method of claim 1, wherein the step of providing wash solution comprises providing wash solution having a concentration of organic and inorganic species, such that no more than about 10% of ozone added for the wash solution can be consumed by the organic species.

13. A method for disinfecting wash solution used in fuel processing comprising:
providing wash solution;
analyzing the wash solution to determine the oxygen demand level of the wash solution;
processing the wash solution to adjust the oxygen demand level of the wash solution; and
introducing ozone into the wash solution.

14. The method of claim 13, wherein providing wash solution comprises providing recycled wash solution.

15. The method of claim 13, wherein processing the wash solution comprises adjusting the oxygen demand level, such that no more than about 50% of ozone added to the wash solution can be consumed by organic and inorganic species present in the wash solution.

16. The method of claim 15, wherein processing the wash solution comprises reducing the concentration of organic and inorganic species using a process selected from the group consisting of filtration and oxidation.

17. The method of claim 13, wherein the introducing ozone comprises injecting gaseous ozone into the wash solution.

18. The method of claim 17, wherein injecting gaseous ozone comprises injecting ozone with a feed gas selected from the group consisting of oxygen, air and mixtures thereof, and an inert gas and mixtures thereof.

19. The method of claim 18, wherein the inert gas is selected from the group consisting of nitrogen, carbon dioxide, argon, krypton, xenon, neon, and mixtures thereof.

20. The method of claim 13, wherein introducing ozone comprises introducing ozone at a flow rate sufficient to impart a constant total ozone dose C•T, where C is the ozone concentration and T is the ozone contact time.

21. The method of claim 13, wherein processing the wash solution comprises adjusting the oxygen demand level, such that no more than about 10% of ozone added to the wash solution can be consumed by organic and inorganic species.

22. A method for disinfecting wash solution used in food processing:
providing wash solution having a concentration of organic and inorganic species, such that the organic and inorganic species can consume no more than about 50% of ozone added to the wash solution; and
introducing ozone into the wash solution in an amount sufficient to maintain a constant total ozone dose C•T, where C is the dose of ozone introduced to the wash solution and T is the total ozone constant time.

23. The method of claim 22, wherein providing the wash solution comprises treating the wash solution to lower the concentration of organic and inorganic species.

24. The method of claim 23, wherein treating comprises subjecting the wash solution to a process selected from the group consisting of filtration and oxidation.

25. The method of claim 24, wherein the wash solution is maintained at a temperature of about 0° C. to about 25° C.

26. The method of claim 24, wherein providing a wash solution comprises analyzing the wash solution to determine the total concentration of organic and inorganic species and reducing the concentration of organic and inorganic species in the wash solution.

27. The method of claim 26, wherein the wash solution comprises recycled wash solution.

28. The method of claim 22, further comprising subjecting food products the wash solution.

29. The method of claim 22, wherein the step of providing wash solution comprises providing wash solution having a concentration of organic and inorganic species, such that no more than about 10% of ozone added for the wash solution can be consumed by the organic species.

30. A process for disinfecting wash solution used in food processing comprising the steps of:
analyzing wash solution to determine a total concentration of organic and inorganic species in the wash solution;
treating the wash solution to reduce the total concentration of organic and inorganic species;
injecting ozone into the wash solution;
introducing food products into a washing system; and
washing the food products with the wash solution in the washing system.

31. The process of claim 30, wherein the step of analyzing the wash solution comprises transferring the wash solution to a bypass line if the wash solution has an excess oxygen demand of less than about 50%.

32. The process of claim 30, wherein the step of treating the wash solution comprises a process selected from the group consisting of filtration and oxidation.

33. The process of claim 30, wherein the step of introducing ozone comprises injecting gaseous ozone into the wash solution.

34. The process of claim 33, wherein the step of injecting gaseous ozone comprises injecting ozone with a feed gas selected from the group consisting of oxygen, air and mixtures thereof, and an inert gas and mixtures thereof.
